# EUROPÄISCHE PATENTSCHRIFT

(11) **EP 3 625 631 B1**
(45) Veröffentlichungstag und Bekanntmachung des Hinweises auf die Patenterteilung: **22.11.2023**
(21) Anmeldenummer: 18753111.6
(22) Anmeldetag: 01.08.2018
(51) Int. Cl.: G05B 19/416

(54) **VERFAHREN ZUM BETRIEB EINER NUMERISCH GESTEUERTEN WERKZEUGMASCHINE SOWIE WERKZEUGMASCHINE DAZU**
METHOD FOR OPERATING A NUMERICAL CONTROLLED MACHINE TOOL AND MACHINE TOOL FOR SAME
PROCÉDÉ DE FONCTIONNEMENT D'UNE MACHINE-OUTIL À COMMANDE NUMÉRIQUE AINSI QUE MACHINE-OUTIL ASSOCIÉE

(30) Priorität: 14.08.2017 EP 17186144
(43) Veröffentlichungstag der Anmeldung: 25.03.2020
(73) Patentinhaber: Siemens Aktiengesellschaft, 80333 München (DE)
(72) Erfinder: PITZ, Thomas, 71277 Rutesheim (DE); SPIELMANN, Ralf, 70569 Stuttgart (DE)
(74) Vertreter: Siemens Patent Attorneys
(86) Internationale Anmeldenummer: PCT/EP2018/070828
(87) Internationale Veröffentlichungsnummer: WO 2019/034423

(56) Entgegenhaltungen:
- EP-A2- 0 530 790
- JUN-BIN WANG ET AL: "Real-time NURBS interpolator: application to short linear segments", THE INTERNATIONAL JOURNAL OF ADVANCED MANUFACTURING TECHNOLOGY, SPRINGER, BERLIN, DE, Bd. 41, Nr. 11-12, 25. Juni 2008 (2008-06-25), Seiten 1169-1185, XP019700557, ISSN: 1433-3015
- LIU X ET AL: "Adaptive interpolation scheme for NURBS curves with the integration of machining dynamics", INTERNATIONAL JOURNAL OF MACHINE TOOLS AND MANUFACTURE, ELSEVIER, AMSTERDAM, NL, Bd. 45, Nr. 4-5, 1. April 2005 (2005-04-01), Seiten 433-444, XP027815496, ISSN: 0890-6955 [gefunden am 2005-04-01]
- XAVIER BEUDAERT ET AL: "Feedrate interpolation with axis jerk constraints on 5-axis NURBS and G1 tool path", INTERNATIONAL JOURNAL OF MACHINE TOOLS AND MANUFACTURE, ELSEVIER, AMSTERDAM, NL, Bd. 57, 8. Februar 2012 (2012-02-08), Seiten 73-82, XP028519063, ISSN: 0890-6955, DOI: 10.1016/J.IJMACHTOOLS.2012.02.005 [gefunden am 2012-02-16]

## Beschreibung

Die Erfindung betrifft ein Verfahren zum Betrieb einer numerisch gesteuerten Werkzeugmaschine, die mindestens eine Bewegungsachse aufweist und die mit einer numerischen Steuerung verbunden ist.

Die Erfindung betrifft weiterhin eine Werkzeugmaschine mit einer numerischen Steuerung.

Die wesentliche Aufgabe einer Werkzeugmaschine ist die Fertigung von Werkstücken durch Relativbewegungen zwischen Werkzeug und Werkstück. Dazu muss eine mit der Werkzeugmaschine verbundene numerische Steuerung (NC-Steuerung) Sollwerte für Achsbewegungen generieren, die an dem Werkstück eine Kontur entsprechend einer Fertigungszeichnung oder CAD-Konstruktion realisieren. Um die Konturinformation des zu fertigenden Werkstücks der numerischen Steuerung zugänglich zu machen, muss die Konturinformation in ein für verschiedene Steuerungssysteme und verschiedene Maschinentypen einheitliches Steuerungsprogramm übertragen werden. Ein derartiges Steuerprogramm zur Herstellung von Werkstücken wird üblicherweise Teileprogramm oder NC-Programm genannt. Das Teileprogramm ist in Sätzen aufgebaut, wobei es Sätze umfasst, die eine Bewegung zu einem Zielpunkt inklusive entsprechender Randbedingungen repräsentieren. Der entsprechende Quelltext für die Sätze, auch G-Code genannt, ist für alle Steuerungshersteller verbindlich, er kann jedoch durch herstellerspezifische Zyklen oder Funktionen ergänzt bzw. erweitert werden.

In der EP 0 530 790 A2 ist ein Teileprogramm beschrieben, bei dem einzelne Blöcke oder Sätze derart erweitert sind, dass sie die relative Bewegung von Werkzeug und Werkstück zueinander in den Start- und Endpunktbereichen für eine automatische Steuerung der Linear- und Rundachsen spezifizieren. So kann die Vorschubgeschwindigkeit innerhalb eines Blocks auf der Grundlage von voreingestellten Regeln gesteuert werden, ohne eine Bearbeitungsbahn in mehrere Blöcke zum Steuern der Vorschubgeschwindigkeit zu unterteilen. In einer weiteren Ausgestaltung umfassen die Regeln eine automatische Erniedrigung der Vorschubgeschwindigkeit am Anfang und am Ende einer Werkstückbearbeitung und eine automatische Erhöhung der Vorschubgeschwindigkeit, wenn das Werkzeug ohne Werkstückkontakt verfahren wird. Die Zustellgeschwindigkeit wird so in Abhängigkeit der Werkzeugposition zum Werkstück modifiziert. Die voreingestellten Regeln sind durch einen Bediener veränderbar.

In der modernen Fertigung mittels Werkzeugmaschinen werden in dem gesamten Prozess von der computer-gestützten Konstruktion (CAD oder Computer Aided Design) über die Arbeitsvorbereitung (CAM oder Computer Aided Manufacturing) bis zur Steuerungshersteller-abhängigen Aufbereitung der Fertigungsdaten (PP oder Post Processing in der Werkzeugmaschine) allgemein aus digitalen Modellen Bahnen für Werkzeugbewegungen erzeugt. Besonders im Formenbau-Umfeld ist der CAD-CAM-PP-Prozess wegen der häufig angewendeten Freiformen schon immer in Verwendung. Die Freiformen werden als digitales Modell des Werkstücks im CAD-System erzeugt. Im CAM-System werden mit dem darunterliegenden CAD-Modell die zur Bearbeitung notwendigen Werkzeugbahnen in einer allgemeinen Sprache (beispielsweise als G-Code) als Output generiert. Dieser Output wird in die jeweilige Sprache der numerischen Steuerung übersetzt.

Zur Herstellung eines Werkstücks aus einem Rohteil werden in der Werkzeugmaschine die Bahnen mit einem Werkzeug abgefahren. Historisch bedingt sind diese Bahnvorgaben in einem NC-Programm zunächst kleine Linearbewegungen, das sind in dem NC-Programm die G1-Sätze, die die Bewegungen des Werkzeugs der Werkzeugmaschine relativ zum Werkstück beschreiben. Da diese Linearstücke das ursprüngliche digitale Modell nur annähernd beschreiben und die Werkzeugmaschine an jedem Übergang von einem zum nächsten Linearstück (kleine Ecke) zum Abbremsen und zum erneuten Beschleunigung der Bewegung zwingen, wurden von verschiedenen Steuerungsherstellern Algorithmen entwickelt, die diese Bahnstücke innerhalb von Toleranzen in Polynome, Splines oder ähnliche stetige und meist auch stetig differenzierbare Kurven überführen, um so eine möglichst gleichmäßige Bewegung der Werkzeugmaschine zu erzeugen.

So beschreiben Jun-Bin Wang und Hong-Tzong Yau in dem Artikel "Real-time NURBS interpolator: application to short linear segments", erschienen in Int J Adv Manuf Technol (2009), Band 41, Seiten 1169 bis 1185, einen Real-time, nicht-gleichförmigen rationalen B-Spline (NURBS) Interpolator, der eine Vielzahl von kurzen linearen Segmenten in Real-time durch NURBS-Kurven approximiert. Auf der Grundlage der geometrischen Eigenschaften der approximierten Kurven und der Dynamik des Stellmotorensteuerung wird dort eine modifizierte Gleichung der maximalen Zustellgeschwindigkeit abgleitet.

Auch in dem Artikel "Adaptive interpolation scheme for NURBS curves with the integration of machining dynamics" von Xianbing Liu, Fahad Amad, Kazuo Yamazahki und Masahiko Mori, erschienen in International Journal of Machine Tools & Manufacture (2005), Band 45, Seiten 433 bis 444 wird die Anwendung von nicht-gleichformigen, rationalen B-Spline (NURBS) Kurven beschrieben, die gleichzeitig die Anforderungen einer konstanten Zustellgeschwindigkeit und Profilsehnengenauigkeit berücksichtigt und zudem in Real-time die Maschinendynamik im Interpolationsprozess integriert. Die Maschinendynamik wird dabei unter drei Gesichtspunkten berücksichtigt: Form der Ecken oder für die Zustellgeschwindigkeit heikle Ecken, Anteile mit hohen Frequenzen oder mit Frequenzen, die denen der natürlichen Frequenzen der Maschine nahe kommen, und starke Rucke.

Der Artikel "Feedrate interpolation with axis jerk constraints on 5-axis NURBS and G1 tool path" von Beudaert, Lavernhe, Tounier, erschienen in International Journal of Machine Tools & Manufacture (2012), Band 57, Seiten 73 bis 82, beschreibt einen Algorithmus zur Bestimmung eines optimalen Zustellgeschwindigkeitsprofils aus den Vorgaben eines NC-Programms. Dabei werden die kinematischen Charakteristiken der Maschine bestmöglich ausgenutzt. Zudem werden sowohl tangentiale Rucke wie auch Achsenrucke berücksichtigt.

Betrachtet man die im Formenbau maßgeblichen Technologie-Parameter, wie beispielsweise Vorschubwert und Spindeldrehzahl, so werden diese beispielsweise in der Fertigbearbeitung - beim Fräsen ist das der beispielsweise Schlichtprozess - meist für das Werkzeug, das das komplette Werkstück fertigstellt, konstant gehalten. Das heißt, dass für das Werkzeug nur ein Vorschubwert und eine Spindeldrehzahl für die gesamte Schlichtbearbeitung vorgegeben werden.

Durch das Konstanthalten der Technologie-Parameter bleibt der Zahneingriff gleichmäßig und die Kräfte an der Werkzeugschneide bleiben ähnlich. Beides erzeugt zumindest in weiten Oberflächenbereichen eine sehr harmonische und gleichmäßige Oberflächenstruktur. Es gibt allerdings auch Oberflächenbereiche, in denen diese Vorgehensweise, nämlich die maßgeblichen Technologie-Parameter konstant zu halten, nicht optimal funktioniert. Derartige Flächenbereiche sind beispielsweise Bereiche, in denen der Fräserradius dem Konturradius ähnlich wird. An diesen Oberflächenbereichen gibt es eine hohe Werkzeugumschlingung durch die Kontur. Dadurch können bei der Werkstückbearbeitung unerwünschte Schwingungen entstehen.

Bei neueren, stärker technologieorientierten CAM-Algorithmen rücken weitere Technologie-Parameter, wie beispielsweise die Zustelltiefe, die Zustellbreite, das Spanvolumen, der Umschlingungswinkel usw., in den Vordergrund und verdrängen bzw. reduzieren die Wichtigkeit der klassischen Parameter Bahnvorschub und Spindeldrehzahl. Bei der Berechnung der Werkzeugbahnen werden bei diesen CAM-Algorithmen unter anderem die Werkzeugdaten, die Bearbeitungsgeometrie, das verwendete Material sowie die Leistungsdaten der CNC-Maschine berücksichtigt. Die Vorteile dieser neuen technologieorientierten CAM-Algorithmen sind eine kürzere Bearbeitungszeit und bessere Werkstückoberflächen. Die Nachteile der technologieorientierten CAM-Algorithmen sind spezifischere Bearbeitungswerkzeuge, da eher an der Lastgrenze des Werkzeuges gearbeitet wird, und wesentlich komplexere NC-Teileprogramme, die durch das Einhalten der Lastgrenzen der Werkzeuge entstehen.

So hat sich durch die stärker technologieorientierten CAM-Algorithmen das NC-Teileprogramm dahingehend erweitert, dass nun die Vorschubgeschwindigkeit mehrfach geändert wird, um das Zeit-Span-Volumen konstant zu halten und um das Fräswerkzeug nicht zu überlasten. Das wirft die Problemstellung bzw. die Anforderung auf, dass diese sich häufig ändernden Vorschubvorgaben nicht hart bzw. sofort an der Maschine realisiert werden, sondern sich möglichst gleichmäßig und stetig zwischen den Vorschubangaben ändern und in einer sinnvollen Art und Weise von der Steuerung verarbeitet und von der Maschine realisiert werden sollen. Auch bei anderen CAM-Algorithmen wird verstärkt die Möglichkeit genutzt die Vorschubgeschwindigkeit zu variieren, wenn die Bearbeitungssituationen dies erfordern.

Aus fertigungstechnischen und wirtschaftlichen Gründen werden beispielsweise Turbinenschaufeln auf eigens entwickelten Werkzeugmaschinen oder auf dafür optimierten Werkzeugmaschinen gefertigt. Somit werden meist nur eine oder wenige, sehr ähnliche Fertigungen auf der Werkzeugmaschine "eingestellt" bzw. projektiert. Damit ist eine derartig spezialisierte und optimierte Werkzeugmaschine in der Lage, eine hochpräzise Turbinenschaufelfertigung durchführen. Bei der Einstellung bzw. Optimierung der Werkzeugmaschine wird darauf geachtet, dass der Arbeitspunkt, also die Fräserspitze, idealerweise im Drehpunkt der beiden Rundachsen liegt. Das hat den Vorteil, dass eine von den Rundachsen verursachte notwendige Bewegung durch kleinste Ausgleichsbewegungen der Linearachsen kompensiert werden muss. Das bedeutet, dass die Maschinenachsen quasi unabhängig voneinander eingestellt und optimiert werden können. Durch das unabhängig voneinander mögliche Einstellen der Maschinenachsen wird nun beispielsweise für die oben schon erwähnten kritischen Bereiche der Turbinenschaufelbearbeitung erreicht, dass die Rundachsen, die auf der Profilober- und -unterseite (weniger kritische Bereiche) weniger schnell und an der Profilnase und der Profilhinterkante (kritische Bereiche) durch die notwendige Umorientierung schneller fahren müssen, auf den jeweiligen kritischen Bereich hin optimiert bzw. begrenzt werden können. Die Begrenzung wird durch Reduzierung der jeweiligen Rundachsdynamik erreicht. Die Fräsbearbeitung wird damit so beeinflusst, dass die Genauigkeitsanforderungen und die Anforderungen der Wirtschaftlichkeit ausschließlich über geänderte Vorgaben der Achsdynamik erreicht werden. Die Werkzeugmaschine bearbeitet die Turbinenschaufel an Profilnase und Profilhinterkante wegen der starken Umorientierungen langsam und genau und an der Profilober- und -unterseite wegen der schwachen Umorientierungen schnell.

Der Erfindung liegt die Aufgabe zugrunde, ein Verfahren zum Betrieb der eingangs genannten numerisch gesteuerten Werkzeugmaschine anzugeben, das es ermöglicht, unabhängig von der Art der Werkzeugmaschine und/oder der Achsdynamik der Werkzeugmaschine unterschiedliche im Teileprogramm vorgegebene Vorschubwerte in möglichst gleichmäßige Relativbewegungen zwischen einem Werkzeug und einem Werkstück in der Werkzeugmaschine zu transformieren.

Der Erfindung liegt ebenfalls die Aufgabe zugrunde, eine Werkzeugmaschine anzugeben, die zur Durchführung des Betriebsverfahrens ausgebildet ist.

Die erstgenannte Aufgabe wird durch ein Verfahren mit den Merkmalen des Anspruchs 1 gelöst. Danach umfasst das Verfahren zum Betrieb einer Werkzeugmaschine, die mindestens eine Bewegungsachse aufweist und die mit einer numerischen Steuerung verbunden ist, die Merkmale, dass die Bewegungen jeder Bewegungsachse durch eine maximal zulässige Achsdynamik begrenzt sind, dass in der numerischen Steuerung ein Teileprogramm vorhanden ist, dass das Teileprogramm in Form von NC-Sätzen eine Folge von Anweisungen zur Bearbeitung eines Werkstücks umfasst, dass die Folge von Anweisungen in den NC-Sätzen in Form von F-Werten die Vorgabe verschiedener, über der Zeit sprunghaft sich ändernder maximaler Sollgeschwindigkeiten für die Bearbeitung des Werkstücks umfasst, dass die numerische Steuerung die verschiedenen, über der Zeit sprunghaft sich ändernden maximalen Sollgeschwindigkeiten aufeinander folgender Sätze durch ein über der Zeit stetiges Sollgeschwindigkeitsprofil mit einem über der Zeit stetigen Verlauf der maximalen Sollgeschwindigkeiten approximiert und dass die numerische Steuerung das stetige Sollgeschwindigkeitsprofil unter Berücksichtigung der maximal zulässigen Achsdynamik zur Berechnung der Sollwerte eines tatsächlichen Bewegungsprofils der Bewegungen für jede Bewegungsachse verwendet.

Damit werden die im NC-Teileprogramm programmierten Sollvorschubwerte analog wie programmierte Achspositionswerte behandelt. So werden die im Teileprogramm vorgegebenen programmierten, sprunghaft sich ändernden maximalen Sollgeschwindigkeiten oder Sollvorschubwerte mittels Algorithmen innerhalb von Toleranzen in stetige Kurven überführt. Diese stetigen Kurven werden dann als stetiges Sollgeschwindigkeitsprofil oder stetiges maximales Sollvorschubprofil für das Vorgeben der Bahngeschwindigkeit verwendet. Die durch das Teileprogramm vorgegebenen Vorschubwerte aufeinander folgender Sätze werden somit unter Berücksichtigung vorgegebener Toleranzen geglättet. Damit wird der Vorschub insgesamt gleichmäßiger. Auch eine Vielzahl von aufeinanderfolgenden, stufenartigen Vorschubänderungen in den Sätzen des NC-Programms kann so problemlos realisiert werden. Diese aufeinanderfolgenden "Linearsätze für die Sollgeschwindigkeit" werden in der numerischen Steuerung ähnlich wie die aufeinanderfolgenden Linearsätze für die Kontur aufbereitet. Das NC-Programm kann so entworfen und erstellt werden, dass auch nicht spezialisierte Werkzeugmaschinen flexibel, effizient und mit gleichmäßig hoher Bearbeitungsqualität komplexe Oberflächen fertigen können. Zur Berechnung der Bewegungen für jede Bewegungsachse verwendet die numerische Steuerung die maximal zulässige Achsdynamik der Werkzeugmaschine. Bei der Berechnung der Bewegungen für jede Bewegungsachse können Geschwindigkeitswerte im stetigen Sollgeschwindigkeitsprofil durch die maximal zulässige Achsdynamik der Werkzeugmaschine begrenzt werden.

Vorteilhafte Ausgestaltungen des Verfahrens sind durch die Merkmale der Ansprüche 2 bis 12 gegeben.

Gemäß den Merkmalen des Anspruchs 2 bereitet die numerische Steuerung aus der Folge der Anweisungen die Bearbeitung des Werkstücks betreffende Geometriebefehle zu einem Wegprofil auf und verwendet das Wegprofil bei der Berechnung der Bewegungen für jede Bewegungsachse. Die numerische Steuerung verändert die durch die Geometriebefehle im Teileprogramm vorgegebene Geometrie innerhalb einer Toleranz. Dieses Geometrieprofil wird bei der Berechnung der Bewegung der Bewegungsachsen ebenfalls verwendet.

Gemäß den Merkmalen des Anspruchs 6 umfassen die Bewegungen der Bewegungsachsen einen Vorschub des Werkzeugs gegenüber dem Werkstück. An Stellen großer Krümmungen oder an Ecken an dem Werkstück wird der Vorschub der beteiligten Bewegungsachsen verringert und außerhalb dieser Stellen der Vorschub wieder erhöht. An Krümmungen und Ecken im Werkstück, oder an Stellen großer Umorientierung des Werkzeugs, wird zur Erhöhung der Bearbeitungsgenauigkeit der Vorschub begrenzt. Im Gegenzug kann in Bereichen mit nur geringer Krümmung ohne Beeinträchtigung der Bearbeitungsgenauigkeit der Vorschub erhöht werden.

Gemäß den Merkmalen des Anspruchs 7 werden die im Teileprogramm vorgegebenen maximalen Sollgeschwindigkeiten durch ein oder mehrere Polynome zu dem stetigen Sollgeschwindigkeitsprofil approximiert. Die Glättung und Verstetigung des Vorschubverlaufs erfolgt dann unter Einbeziehung der Vorschubwerte eines oder auch mehrerer Nachbarsätze des Teileprogramms. Es wird auf Basis der programmierten Vorschubwerte automatisch ein Polynom-Vorschubprofil durch einen Kompressor z.B. mit einem Polynom-Generator erzeugt.

Gemäß den Merkmalen des Anspruchs 8 werden die im Teileprogramm vorgegebenen maximalen Sollgeschwindigkeiten durch eine oder mehrere Spline-Funktionen zu dem stetigen Sollgeschwindigkeitsprofil approximiert. Dies kann durch einen Kompressor in Form eines Spline-Generators erfolgen.

Gemäß den Merkmalen des Anspruchs 10 wird bei der Approximation des stetigen Sollgeschwindigkeitsprofils eine Bearbeitungsart des Werkstücks berücksichtigt. Beispiele für Bearbeitungsarten, die verschiedene Approximationen bewirken, sind bei der Fräsbearbeitung Schruppen oder Schlichten.

Gemäß den Merkmalen des Anspruchs 11 wird bei der Approximation des stetigen Sollgeschwindigkeitsprofils mindestens ein Technologieparameter der Bearbeitung des Werkstücks berücksichtigt. Wichtige Technologieparameter sind neben dem Bahnvorschub und der Spindeldrehzahl beispielsweise Daten des benutzten Werkzeugs, die Bearbeitungsgeometrie, das verwendete Material sowie die Leistungsdaten der Werkzeugmaschine.

Die zweitgenannte Aufgabe wird durch die Merkmale des Anspruchs 13 gelöst. Danach ist die numerische Steuerung derart ausgebildet, dass sie im Betrieb die Werkzeugmaschine gemäß einem erfindungsgemäßen Verfahren steuert.

Die vorstehend beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: in einem Blockbild den grundsätzlichen Aufbau einer Werkzeugmaschine, womit unabhängig von der Art und/oder der Achsdynamik der Werkzeugmaschine unterschiedliche Vorschubwerte im Teileprogramm in möglichst gleichmäßige Relativbewegungen zwischen einem Werkzeug und einem Werkstück in der Werkzeugmaschine transformiert werden,
- FIG 2: ein Funktionsdiagramm einer Werkzeugmaschinensteuerung, womit unabhängig von der Art und/oder der Achsdynamik der Werkzeugmaschine unterschiedliche Vorschubwerte im Teileprogramm in möglichst gleichmäßige Relativbewegungen zwischen einem Werkzeug und einem Werkstück in der Werkzeugmaschine transformiert werden einer ein Ausschnitt aus einem Ablaufplan zur Speicherung von Zusatzinformation und
- FIG 3: eine Kontur eines Werkstücks, die mit dem erfindungsgemäßen Verfahren herstellbar ist,
- FIG 4: ein Diagramm des Vorschubs über der Zeit ohne Anwendung des erfindungsgemäßen Verfahrens zur Herstellung einer optimalen Oberfläche,
- FIG 5: ein Diagramm des Vorschubs über der Zeit ohne Anwendung des erfindungsgemäßen Verfahrens mit einer verringerten Oberflächenqualität und
- FIG 6: ein Diagramm des Vorschubs über der Zeit mit Anwendung des erfindungsgemäßen Verfahrens zur Herstellung einer optimalen Oberfläche.

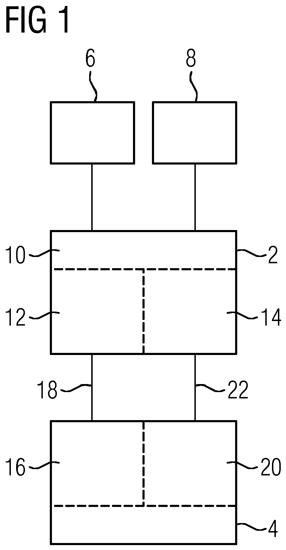

Das Blockbild in FIG 1 zeigt eine numerische Werkzeugmaschinensteuerung 2, die mit einer Werkzeugmaschine 4 zur Bearbeitung eines Werkstücks zusammenwirkt. Der Zugang eines Anwenders oder Bedieners zu der Werkzeugmaschinensteuerung 2 erfolgt über eine Ein-/Ausgabeeinheit 6, die auch als NC-Bedientafel oder Mensch-Maschine-Schnittstelle bezeichnet wird. Zusätzlich kann noch eine Kommunikationsschnittstelle 8 vorgesehen sein, die eine Einbettung der numerisch gesteuerten Werkzeugmaschine 4 in ein Computernetzwerk ermöglicht, diese Betriebsart wird im Englischen als Distributed Numerical Control (DNC) bezeichnet.

Die Werkzeugmaschinensteuerung 2 ist in drei Hauptfunktionsbereiche unterteilt. Ein erster Hauptfunktionsbereich, der COM-Teil 10, erfüllt Kommunikationsaufgaben mit einer angeschlossenen Peripherie, wie zum Beispiel Eingangs- und Ausgangsbaugruppen, Sensoren, Endschaltern und ähnlichem. Des Weiteren dient der COM-Teil 10 der Kommunikation mit der Ein-/Ausgabeeinheit 6. Er stellt zudem eine Programmierungsumgebung zur Verfügung, welche mindestens einen Programmeditor, oft aber zusätzlich auch Simulations- und Testeinrichtungen umfasst.

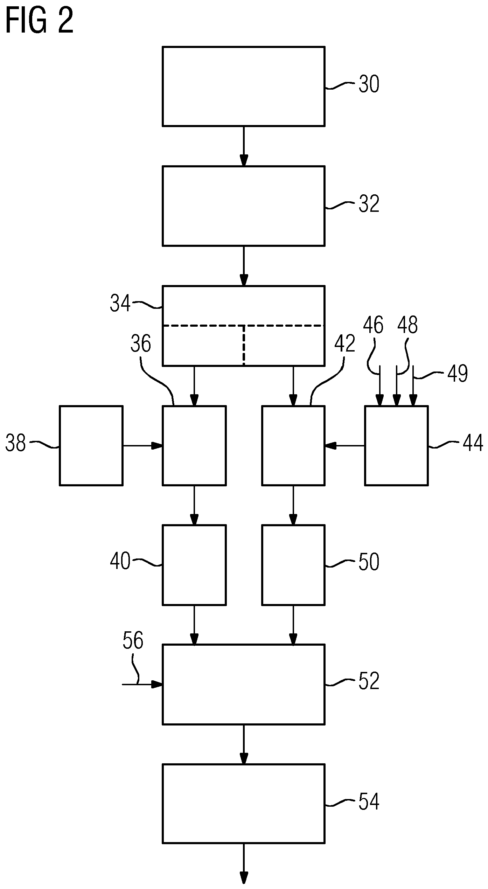

Die Hauptfunktionalität der Werkzeugmaschinensteuerung 2, also eine Wegesteuerung und Interpolation und damit die Erzeugung von Bewegungssollwerten für die Werkzeugmaschine 4, ist in einem NC-Kern 12 realisiert. Insbesondere ist hier der NC-Kern 12 derart erweitert, dass er aus den als Linearsätze vorgegebenen Vorschubwerten, die anschaulich über der Zeit einen stufenförmigen Verlauf aufweisen, ein stetiges Vorschubprofil erzeugt, wie weiter unten noch anhand von FIG 2 beschrieben wird, und dieses anstatt der Vorschubwerte aus den Linearsätzen bei der Berechnung der Bewegung eines Werkzeugs gegenüber einem Werkstück verwendet. Der Begriff der Stetigkeit soll hier so verstanden werden, dass das Vorschubprofil bis auf die durch die Digitalisierung zwangsweise bedingten stufenweisen Änderungen der Vorschubwerte stetig ist.

Schließlich dient die dritte Hauptfunktionalität der Werkzeugmaschinensteuerung 4 einer Anpasssteuerung 14, die der Anpassung der allgemeinen, auf das Werkstück bezogenen Bewegungssteuerung aus dem NC-Kern 12 an die konkrete Werkzeugmaschine 4 dient. Dazu gehören das Ansteuern von Aktoren, das Erfassen von Sensorsignalen, das Realisieren von Überwachungsfunktionen, das Gewährleisten von Sicherheitsfunktionen usw. Die Anpasssteuerung 14 wird mittels einer PLC (programmable logic controller), also mit einer speicherprogrammierbaren Steuerung, ausgeführt.

Die Werkzeugmaschine 4 verwirklicht bei der Bearbeitung eines Werkstücks mit zugehörigen Maschinenbauelementen Bewegungen im Raum. Die Bewegungsrichtung der Maschinenbauelemente ist über Werkzeugmaschinenachsen oder Bewegungsachsen 16 definiert. Die daten- oder signaltechnische Verbindung der Werkzeugmaschinensteuerung 2 mit der Werkzeugmaschine 4 erfolgt bezüglich der Bewegungssollwerte für die Bewegungsachsen 16 über erste Steuerleitungen 18 und bezüglich von Aktoren und Sensoren 20 in der Werkzeugmaschine 4 über binäre Ein-/Ausgänge über zweite Steuerleitungen 22.

FIG 2 zeigt in einem Blockbild die wesentlichen Funktionsblöcke eines Ausführungsbeispiels des erfindungsgemäßen Betriebsverfahrens für die Werkzeugmaschinensteuerung 2. Die konstruktive Beschreibung eines Werkstücks wird in Form eines elektronischen Modells in einem CAD-System 30 erstellt. Von einem CAM-System 32 werden die Geometriedaten für das Rohteil, das Fertigteil und die Aufspannvorrichtung aus dem CAD-System 30 übernommen. Gelegentlich ist es erforderlich, dass die Geometrie verändert, beziehungsweise verbessert, oder eine neue Geometrie erstellt werden muss. Der Werkstoff und eine Werkzeugmaschine 4 werden aus Tabellen ausgewählt, damit das CAM-System 32 die Randbedingungen kennt und geeignete Verfahrbewegungen und Schnittwerte vorschlagen kann. Als Ergebnis liegen die einzelnen Bearbeitungsschritte von einem Rohteil zu einem fertigen Werkstück in Form eines oder mehrerer NC-Programme 34 vor.

Das NC-Programm 34 enthält Programmsätze, die beispielsweise für einen Bearbeitungsschritt eine Zielposition, eine Werkzeugbahnkorrektur, einen Bahnvorschub oder einen Achsvorschub, eine Spindeldrehzahl, usw., sowie Zusatzfunktionen für Programm- und Spindel-Kontrolle umfassen. Beispielsweise bedeutet "F40000" in einem NC-Satz, dass mit der angesprochenen Bewegungsachse 16 mit einem maximalen Vorschub von 40.000 mm/min oder 40 m/min in der Werkzeugmaschine 4 gefahren werden soll.

Die in aufeinanderfolgenden Sätzen vorgegebenen Zielpositionen oder Geometriedaten werden in einem ersten Approximationsmodul 36 mittels eines ersten Kompressionsgenerators 38 durch Polynom-Funktionen approximiert. Damit werden die vom NC-Programm vorgegebenen aufeinander folgenden linearen Weg-Zeit-Daten für die einzelnen Bewegungsachsen 16 "geglättet". Die approximierten Weg-Zeit-Kurven oder auch Geometrieprofile 40 besitzen so einen - bis auf das Digitalisierungsrauschen - über der Zeit stetigen Verlauf.

Ähnlich wie die Geometriedaten werden auch die in aufeinanderfolgen Sätzen vorgegebenen Vorschubdaten in einem zweiten Approximationsmodul 42 mittels eines zweiten Kompressionsgenerators 44 approximiert. Da die Vorschubangaben im Teileprogramm nach dem G-Code als F-Wert definiert sind, kann die Glättung und Approximation auch als F-Wert-Glättung bezeichnet werden. Die approximierten Vorschubdaten oder Geschwindigkeitsprofile besitzen so einen - bis auf das Digitalisierungsrauschen - über der Zeit stetigen Verlauf.

Der zweite Kompressionsgenerator 44 ermöglicht beispielsweise eine Polynom-Approximation oder eine Spline-Approximation der verschiedenen, nicht-stetig aufeinanderfolgenden Vorschubangaben aus den einzelnen Sätzen des NC-Programms 34. Dabei dürfen vorgegebene Toleranzen oder Abweichungen von den vorgegebenen Vorschubdaten nicht überschritten werden. Die Toleranzen werden im Wesentlichen von der Bearbeitungsart des Werkstücks, symbolisiert durch einen Pfeil 46, und von den Technologieparametern, symbolisiert durch einen Pfeil 48, bei der Bearbeitung vorgegeben. Sie können aber auch durch einen Maschinenführer festgelegt werden, symbolisiert durch einen Pfeil 49. Im Ergebnis wird so ein stetiges Vorschubprofil 50 mit maximal zu fahrenden Vorschubwerten erzeugt. Das Vorschubprofil 50 ist im Ergebnis ein über der Zeit stetiges Sollgeschwindigkeitsprofil mit einem über der Zeit stetigen Verlauf der maximalen Sollgeschwindigkeiten. Dieses Vorschubprofil 50 wird - anstatt wie herkömmlich die nicht-stetigen Vorschubdaten aus den NC-Sätzen - als Eingangsgröße für eine Berechnung der Wegesteuerung 52 verwendet. Die Werte des Vorschubprofils 50, das den stetigen Verlauf der maximalen Sollgeschwindigkeiten des Vorschubs darstellt, werden unter Berücksichtigung der Geometrieprofile 40 für die Erstellung eines tatsächlichen Bewegungsprofils 54 der Werkstückbearbeitung verwendet. Dieses Bewegungsprofil 54 gibt die Sollwerte der Bewegungsachsen 16 vor. Bei der Erstellung des Bewegungsprofils 54 wird auch noch die maximale Achsdynamik der zur Bearbeitung eingesetzten Werkzeugmaschine 4 berücksichtigt, symbolisiert durch einen Pfeil 56.

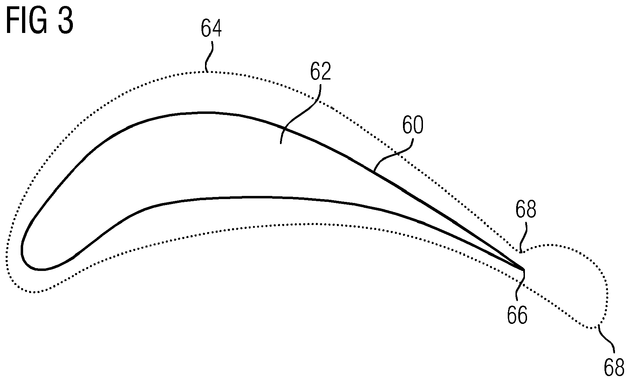

FIG 3 zeigt beispielhaft eine Kontur 60 einer Turbinenschaufel 62 als Werkstück, die mit der Werkzeugmaschine 4 aus einem Rohteil gefräst wird. Eine Punktfolge 64 soll eine Mittelpunktbahn eines Schaftfräsers mit Eckenverrundung beschreiben, wie es aufeinander folgende Linearsätze des dazugehörigen NC-Programms 34 vorgeben. Da die Fräsermittelpunktsbahn programmiert ist, entsteht die Ausbeulung in der Mittelpunktsbahn in FIG 3 am rechten Rand oder hinteren Ende der Turbinenschaufel 62 deshalb, weil der Fräser nicht senkrecht zur Werkstückoberfläche steht, sondern mit einem Anstellwinkel von z.B. 10° gearbeitet wird. Die Linearsätze gelten für verschieden lange Bahnen, deren Länge durch die Krümmung der Kontur und der zulässigen Oberflächentoleranz vorgegeben ist. Die kritischen Partien der Bearbeitung entstehen an Stellen 66 großer Umorientierung des Werkzeugs, hier des Fräsers, bei der Bearbeitung einer Profilhinterkante 66 der Turbinenschaufel 62. An Krümmungen 68 in der Mittelpunktsbahn soll der Vorschub geringer sein, um die Bearbeitungsgenauigkeit und damit die Oberflächenqualität zu erhöhen. Daher ist an diesen Stellen der Vorschub, das entspricht dem F-Wort im entsprechenden Satz des NC-Programms, reduziert.

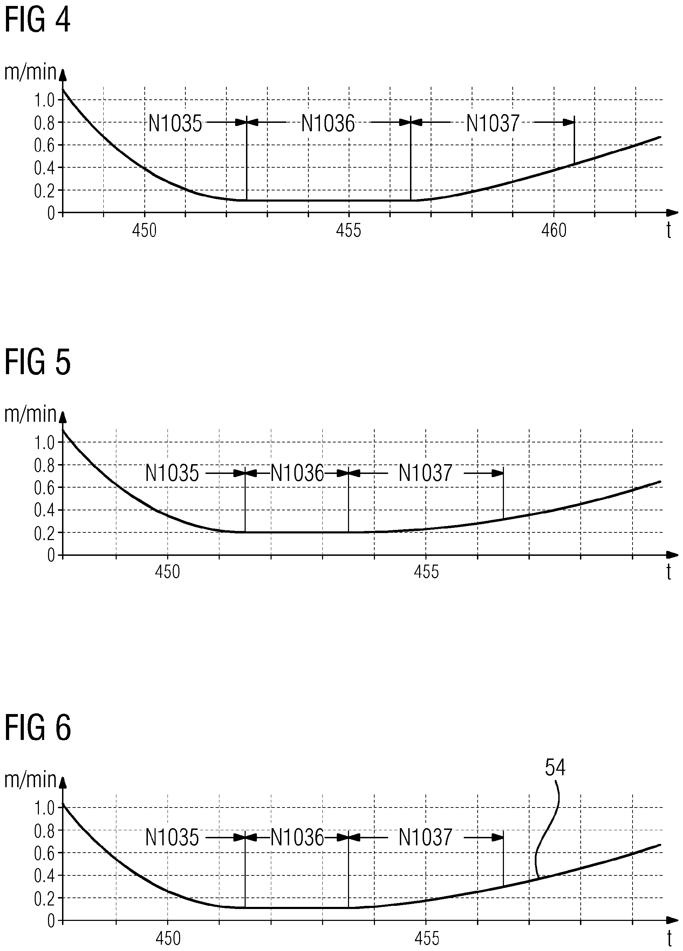

In FIG 4 bis 6 sind in Abhängigkeit der Zeit beispielhaft der Vorschub bei der Bearbeitung der Profilhinterkante 66 der Turbinenschaufel 60 für verschiedene NC-Programm-Sätze dargestellt, wobei die FIG 4 und 5 einen möglichen Verlauf mit einer herkömmlichen Steuerung beschreiben, wogegen die FIG 6 einen Verlauf zeigt, wie er sich bei der Anwendung des erfindungsgemäßen Betriebsverfahrens für die Werkzeugmaschinensteuerung 2 ergibt. Die Größeneinheit der Vorschubwerte in den Diagrammen ist m/min oder (mm/min*10³), die Zeit t auf der Abszisse ist in Takteinheiten angegeben.

FIG 4 zeigt einen Ausschnitt eines tatsächlich zu fahrenden Vorschubprofils als Teil des tatsächlichen Bewegungsprofils 54, wie es sich bei der herkömmlichen Wegesteuerung eines NC-Programms 34 einstellt. Die zu dem Vorschubverlauf gehörenden Linearsätze umfassen folgende, stark vereinfacht wiedergegebene Anweisungen:
N100 (Fahre linear mit max. Vorschub 40.000mm/min)
   [...]
N1033 (Fahre auf Position1 mit max. Vorschub 40.000 mm/min)
N1034 (Fahre auf Position2 mit max. Vorschub 40.000 mm/min)
N1035 (Fahre auf Position3 mit max. Vorschub 40.000 mm/min)
N1036 (Fahre auf Position4 mit max. Vorschub 100 mm/min)
N1037 (Fahre auf Position5 mit max. Vorschub 40.000 mm/min) [...]

Die Begrenzung des Vorschubs auf 100 mm/min im Linearsatz N1036 wirkt bei dieser Programmvariante somit über den gesamten Linearsatz N1036. Dadurch wird die Geschwindigkeit zwischen Position3 und Position4 konstant auf den reduzierten Maximalvorschub gesetzt. Dieses Verhalten ist insofern nachteilig, da nicht nur an der Profilhinterkante 66 die Vorschubgeschwindigkeit abgesenkt wird, sondern im gesamten Bereich von Position3 bis Position4.

FIG 5 zeigt den Vorschub-Vorgabenverlauf der Steuerung ohne eine Begrenzung des Vorschubs im Satz N1036, also der in Satz N100 definierte maximale Vorschubwert gilt für alle Sätze im Programm, insbesondere auch für den Satz N1036. Die entsprechenden Sätze im Teileprogramm wirken dann wie folgt:
N100 (Fahre linear mit max. Vorschub 40.000mm/min)
   [...]
N1033 (Fahre auf Position1 mit max. Vorschub 40.000 mm/min)
N1034 (Fahre auf Position2 mit max. Vorschub 40.000 mm/min)
N1035 (Fahre auf Position3 mit max. Vorschub 40.000 mm/min)
N1036 (Fahre auf Position4 mit max. Vorschub 40.000 mm/min)
N1037 (Fahre auf Position5 mit max. Vorschub 40.000 mm/min) [...]

Dadurch wird an der Profilhinterkante 66 der Vorschub durch das Wirksamwerden der Begrenzung der Achsdynamik nur auf ca. 200 mm/min abgebremst, was in diesem Beispiel zu Problemen mit der Oberflächenqualität des gefertigten Werkstücks führt.

FIG 6 zeigt schließlich das tatsächlich gefahrene Vorschubprofil 54 bei der Abarbeitung des gleichen NC-Programms 34 wie bei FIG 4, wobei jedoch die vom NC-Programm 34 vorgegebenen maximalen Vorschubwerte über die Nachbarsätze geglättet und zu einem stetigen Vorschubprofil 50 approximiert werden. Die Vorschubgeschwindigkeit wird hier nur genau an der Profilhinterkante 66 auf 100 mm/min reduziert. Dabei wird noch die tatsächliche, am Werkstück bearbeitete Geometrie der Profilhinterkante 66 berücksichtigt, da die Steuerung 2 die vom Teileprogramm 34 vorgegebene Geometrie zur Wegeberechnung des Werkzeugs mittels Kompressoren innerhalb der Grenzen eines bestimmten Toleranzbandes selbsttätig nach Ort und Form modifiziert.

Da durch die erfindungsgemäße Approximation zu einem stetigen Vorschubprofil 50 nur im Bereich von starken Krümmungen, wie die Profilhinterkante 66, die Vorschubgeschwindigkeit reduziert wird, ergibt sich bei einer gleichmäßig hohen Oberflächenqualität des Werkstücks, wie beispielsweise die Turbinenschaufel 62, eine insgesamt geringere Fertigungszeit und damit eine höhere Wirtschaftlichkeit des Fertigungsprozesses, insbesondere bei einer Anwendung einer nicht-spezialisierten Werkzeugmaschine 4.

## Patentansprüche

1. Verfahren zum Betrieb einer numerisch gesteuerten Werkzeugmaschine (4), die mindestens eine Bewegungsachse (16) aufweist und die mit einer numerischen Steuerung (2) verbunden ist, mit den Merkmalen:
- Bewegungen jeder Bewegungsachse (16) sind durch eine maximal zulässige Achsdynamik begrenzt,
- in der numerischen Steuerung (2) ist ein Teileprogramm (34) vorhanden,
- das Teileprogramm (34) umfasst in Form von NC-Sätzen eine Folge von Anweisungen zur Bearbeitung eines Werkstücks (62),
- die Folge von Anweisungen umfasst in den NC-Sätzen in Form von F-Werten die Vorgabe verschiedener, über der Zeit sprunghaft sich ändernder maximaler Sollgeschwindigkeiten für die Bearbeitung des Werkstücks (62),
- die numerische Steuerung (2) approximiert die verschiedenen, über der Zeit sprunghaft sich ändernden maximalen Sollgeschwindigkeiten aufeinander folgender Sätze durch ein über der Zeit stetiges Sollgeschwindigkeitsprofil (50) mit einem über der Zeit stetigen Verlauf der maximalen Sollgeschwindigkeiten und
- die numerische Steuerung (2) verwendet das stetige Sollgeschwindigkeitsprofil (50) unter Berücksichtigung der maximal zulässigen Achsdynamik zur Berechnung der Sollwerte eines tatsächlichen Bewegungsprofils der Bewegungen für jede Bewegungsachse (16).

2. Verfahren nach Anspruch 1,
**dadurch gekennzeichnet, dass** die numerische Steuerung (2) aus der Folge der Anweisungen die Bearbeitung des Werkstücks (62) betreffende Geometriebefehle zu einem Wegprofil aufbereitet und dass die numerische Steuerung (2) das Wegprofil bei der Berechnung der Bewegungen für jede Bewegungsachse (16) verwendet.

3. Verfahren nach einem der vorstehenden Ansprüche,
**dadurch gekennzeichnet, dass** die Bewegungen jeder Bewegungsachse (16) die Geschwindigkeit umfassen.

4. Verfahren nach einem der vorstehenden Ansprüche,
**dadurch gekennzeichnet, dass** die numerisch gesteuerte Werkzeugmaschine (4) mehrere Bewegungsachsen (16) aufweist.

5. Verfahren nach einem der vorstehenden Ansprüche,
**dadurch gekennzeichnet, dass** die numerisch gesteuerte Werkzeugmaschine (4) mindestens eine Linearachse und mindestens eine Rundachse aufweist.

6. Verfahren nach einem der vorstehenden Ansprüche, **dadurch gekennzeichnet, dass** die Bewegungen der Bewegungsachsen (16) einen Vorschub des Werkzeugs gegenüber dem Werkstück (62) umfassen und dass an Stellen großer Krümmungen (66) oder an Ecken (68) an dem Werkstück (62) der Vorschub der beteiligten Bewegungsachsen (16) verringert und außerhalb dieser Stellen der Vorschub wieder erhöht wird.

7. Verfahren nach einem der vorstehenden Ansprüche,
**dadurch gekennzeichnet, dass** die im Teileprogramm (34) vorgegebenen maximalen Sollgeschwindigkeiten durch ein oder mehrere Polynome zu dem stetigen Sollgeschwindigkeitsprofil (50) approximiert werden.

8. Verfahren nach einem der vorstehenden Ansprüche,
**dadurch gekennzeichnet, dass** die im Teileprogramm (34) vorgegebenen maximalen Sollgeschwindigkeiten durch eine oder mehrere Spline-Funktionen zu dem stetigen Sollgeschwindigkeitsprofil (50) approximiert werden.

9. Verfahren nach einem der vorstehenden Ansprüche,
**dadurch gekennzeichnet, dass** zulässige Abweichungen des approximierten stetigen Sollgeschwindigkeitsprofils (50) von den von dem Teileprogramm vorgegebenen maximalen Sollgeschwindigkeiten vorgegeben werden.

10. Verfahren nach einem der vorstehenden Ansprüche,
**dadurch gekennzeichnet, dass** bei der Approximation des stetigen Sollgeschwindigkeitsprofils eine Bearbeitungsart des Werkstücks (62) berücksichtigt wird.

11. Verfahren nach einem der vorstehenden Ansprüche,
**dadurch gekennzeichnet, dass** bei der Approximation des stetigen Sollgeschwindigkeitsprofils mindestens ein Technologieparameter der Bearbeitung des Werkstücks (62) berücksichtigt wird.

12. Verfahren nach Anspruch 10 oder 11,
**dadurch gekennzeichnet, dass** eine maximal zulässige Änderung der Geschwindigkeit von der Bearbeitungs- und/oder der Technologieart der Werkzeugmaschine (4) abhängig ist.

13. Werkzeugmaschine mit einer numerischen Steuerung (2), wobei die numerische Steuerung (2) derart ausgebildet ist, dass sie im Betrieb die Werkzeugmaschine gemäß einem Verfahren nach einem der Ansprüche 1 bis 12 steuert.

## Claims

1. Method for operating a numerically controlled machine tool (4) which has at least one movement axis (16) and is connected to a numerical controller (2) with the features:
- movements of each movement axis (16) are limited by maximum permissible axis dynamics,
- a parts program (34) is present in the numerical controller (2),
- the parts program (34) comprises a sequence of instructions for machining a workpiece (62) in the form of NC blocks,
- in the NC blocks, the sequence of instructions comprises the specification of different maximum desired speeds for the machining of the workpiece (62), which change suddenly over time, in the form of F values,
- the numerical controller (2) approximates the different maximum desired speeds, which change suddenly over time, of successive blocks by means of a desired speed profile (50) which is constant over time and has a profile of the maximum desired speeds which is constant over time and
- the numerical controller (2) uses the constant desired speed profile (50) while taking into account the maximum permissible axis dynamics to calculate the desired values of an actual movement profile of the movements for each movement axis (16).

2. Method according to claim 1,
**characterised in that** the numerical controller (2) processes the geometry commands relating to the machining of the workpiece (62) from the sequence of instructions to produce a path profile and that the numerical controller (2) uses the path profile in the calculation of the movements for each movement axis (16).

3. Method according to one of the preceding claims,
**characterised in that** the movements of each movement axis (16) comprise the speed.

4. Method according to one of the preceding claims,
**characterised in that** the numerically controlled machine tool (4) has a plurality of movement axes (16).

5. Method according to one of the preceding claims,
**characterised in that** the numerically controlled machine tool (4) has at least one linear axis and at least one rotary axis.

6. Method according to one of the preceding claims,
**characterised in that** the movements of the movement axes (16) comprise a feed of the tool relative to the workpiece (62) and that the feed of the participating movement axes (16) is reduced at places of greater curvature (66) or at corners (68) on the workpiece (62) and the feed is increased again outside these places.

7. Method according to one of the preceding claims,
**characterised in that** the maximum desired speeds specified in the parts program (34) are approximated to the constant desired speed profile (50) by one or more polynomials.

8. Method according to one of the preceding claims,
**characterised in that** the maximum desired speeds specified in the parts program (34) are approximated to the constant desired speed profile (50) by one or more spline functions.

9. Method according to one of the preceding claims,
**characterised in that** permissible deviations of the approximated constant desired speed profile (50) from the maximum desired speeds specified by the parts program are specified.

10. Method according to one of the preceding claims,
**characterised in that** a type of machining of the workpiece (62) is taken into account in the approximation of the constant desired speed profile.

11. Method according to one of the preceding claims,
**characterised in that** at least one technology parameter of the machining of the workpiece (62) is taken into account in the approximation of the constant desired speed profile.

12. Method according to claim 10 or 11,
**characterised in that** a maximum permissible change in the speed is dependent upon the type of machine and/or the type of technology of the machine tool (4).

13. Machine tool with a numerical controller (2), wherein the numerical controller (2) is embodied such that, during operation, it controls the machine tool in accordance with a method according to one of claims 1 to 12.

## Revendications

1. Procédé pour faire fonctionner une machine-outil (4) à commande numérique, qui a au moins un axe (16) de déplacement et qui est reliée à une commande (2) numérique, comprenant les caractéristiques :
- des déplacements de chaque axe (16) de déplacement sont limités par une dynamique d'axe admissible au maximum,
- il y a dans la commande (2) numérique un programme (34) de pièce,
- le programme (34) de pièce comprend, sous la forme d'ensembles NC, une séquence d'instructions pour l'usinage d'une pièce (62),
- la séquence d'instructions comprend, dans les ensembles NC sous la forme de valeurs F, les prescriptions de diverses vitesses de consigne maximum se modifiant de manière brusque en fonction du temps pour l'usinage de la pièce (62),
- la commande (2) numérique donne une approximation des diverses vitesses de consigne maximum, se modifiant d'une manière brusque en fonction du temps, d'ensembles se succédant, par un profil (50) de vitesse de consigne continu en fonction du temps, ayant une courbe continue en fonction du temps des vitesses de consigne maximum, et
- la commande (2) numérique utilise le profil (50) de vitesse de consigne continu en tenant compte de la dynamique d'axe admissible au maximum pour le calcul des valeurs de consigne d'un profil de déplacement réel des déplacements de chaque axe (16) de déplacement.

2. Procédé suivant la revendication 1,
**caractérisé en ce que** la commande (2) numérique, à partir de la séquence des instructions, prépare en un profil de chemin, des instructions géométriques concernant l'usinage de la pièce (62) et **en ce que** la commande (2) numérique utilise le profil de chemin lors du calcul des déplacements de chaque axe (16) de déplacement.

3. Procédé suivant l'une des revendications précédentes,
**caractérisé en ce que** les déplacements de chaque axe (16) de déplacement comprennent la vitesse.

4. Procédé suivant l'une des revendications précédentes,
**caractérisé en ce que** la machine-outil (4) à commande numérique a plusieurs axes (16) de déplacement.

5. Procédé suivant l'une des revendications précédentes,
**caractérisé en ce que** la machine-outil (4) à commande numérique a au moins un axe linéaire et au moins un axe circulaire.

6. Procédé suivant l'une des revendications précédentes,
**caractérisé en ce que** les déplacements des axes (16) de déplacement comprennent une avance de l'outil par rapport à la pièce (62) et **en ce que**, aux emplacements de grandes courbures (66) ou aux coins (68) de la pièce (62), on diminue l'avance des axes (16) de déplacement concernés et, en dehors de ces emplacements, on réaugmente l'avance.

7. Procédé suivant l'une des revendications précédentes,
**caractérisé en ce que** l'on donne en approximation, en un profil (50) de vitesse de consigne continu, par un ou par plusieurs polynômes, les vitesses de consigne maximum données à l'avance par le programme (34) de pièce.

8. Procédé suivant l'une des revendications précédentes,
**caractérisé en ce que** l'on donne en approximation, en le profil (50) de vitesse de consigne continu, par une ou par plusieurs fonctions spline, les vitesses de consigne maximum données par le programme (34) de pièce.

9. Procédé suivant l'une des revendications précédentes,
**caractérisé en ce que** l'on prescrit des écarts admissibles du profil (50) de vitesse de consigne continu, dont a donné une approximation, par les vitesses de consigne maximum données à l'avance par le programme de pièce.

10. Procédé suivant l'une des revendications précédentes,
**caractérisé en ce que**, lors de l'approximation du profil de vitesse de consigne continu, on tient compte d'un type d'usinage de la pièce (62).

11. Procédé suivant l'une des revendications précédentes,
**caractérisé en ce que**, lors de l'approximation du profil de vitesse continu, on prend en compte au moins un paramètre technologique de l'usinage de la pièce (62).

12. Procédé suivant la revendication 10 ou 11,
**caractérisé en ce qu'**une variation admissible au maximum de la vitesse dépend du type d'usinage et/ou du type de technologie de la machine-outil (4).

13. Machine-outil ayant une commande (2) numérique, dans laquelle la commande (2) numérique est constituée de manière à ce qu'elle commande, en fonctionnement, la machine-outil suivant un procédé suivant l'une des revendications 1 à 12.
